# FASCICULE DE BREVET EUROPEEN

(11) **EP 1 101 220 B1**
(45) Date de publication et mention de la délivrance du brevet: **27.11.2002**
(21) Numéro de dépôt: 99932979.0
(22) Date de dépôt: 27.07.1999
(51) Int. Cl.: G11B 5/31

(54) **PROCEDE DE REALISATION COLLECTIVE DE TETES MAGNETIQUES INTEGREES A SURFACE PORTANTE ARRONDIE**
KOLLEKTIVE HERSTELLUNG VON INTEGRIERTEN MAGNETKÖPFEN MIT ABGERUNDETER TRAGENDEN OBERFLÄCHE
METHOD FOR COLLECTIVE PRODUCTION OF MAGNETIC HEADS WITH ROUNDED BEARING SURFACE

(30) Priorité: 28.07.1998 FR 9809641
(43) Date de publication de la demande: 23.05.2001
(73) Titulaire: COMMISSARIAT A L'ENERGIE ATOMIQUE, 75015 Paris (FR)
(72) Inventeur: ALBERTINI, Jean-Baptiste, F-38000 Grenoble (FR); GAUD, Pierre, F-38500 Coublevie (FR); BARROIS, Gérard, F-38120 Le Fontanil (FR); SIBUET, Henri, F-38120 Le Fontanil (FR)
(74) Mandataire: Des Termes, Monique
(86) Numéro de dépôt international: FR9901839
(87) Numéro de publication internationale: WO00007180

(56) Documents cités:
- EP-A- 0 404 340
- EP-A- 0 467 263
- EP-A- 0 515 983
- US-A- 3 843 865
- US-A- 4 418 472
- US-A- 5 067 230
- US-A- 5 167 062
- US-A- 5 189 580
- US-A- 5 718 036
- PATENT ABSTRACTS OF JAPAN vol. 009, no. 156 (P-368), 29 juin 1985 (1985-06-29) -& JP 60 029914 A (NIPPON DENSHIN DENWA KOSHA), 15 février 1985 (1985-02-15)
- PATENT ABSTRACTS OF JAPAN vol. 011, no. 354 (P-638), 19 novembre 1987 (1987-11-19) -& JP 62 132210 A (SONY CORP), 15 juin 1987 (1987-06-15)

## Description

### Domaine technique

La présente invention a pour objet un procédé de réalisation collective de têtes magnétiques intégrées à surface portante arrondie.

Elle trouve une application dans la réalisation de têtes d'enregistrement hélicoïdal sur bande magnétique, notamment pour l'enregistrement vidéo grand public ou professionnel (magnétoscopes de salon, camescopes) ou encore pour les enregistreurs de données informatiques sur bandes ou disques. Elle trouve également des applications dans d'autres têtes d'enregistrement pour bandes, disques, cartes, etc...

Les hautes fréquences autorisées par la petite taille des têtes intégrées en couches minces permettent un enregistrement numérique (par exemple selon la norme DVC pour la vidéo, ou DDS pour l'informatique). Les enregistreurs de données sur bande sont les mémoires de masse informatiques ayant les capacités de stockage les plus importantes et les coûts les plus bas. Les applications informatiques sont les systèmes d'archivage de données, de sauvegarde des disques durs d'un système ou d'un réseau de diffusion de gros logiciels ou de bases de données. Dans le domaine de l'enregistrement vidéo, on peut envisager l'élargissement des applications d'un magnétoscope à celles d'un serveur vidéo centralisant plusieurs films.

### Etat de la technique antérieure

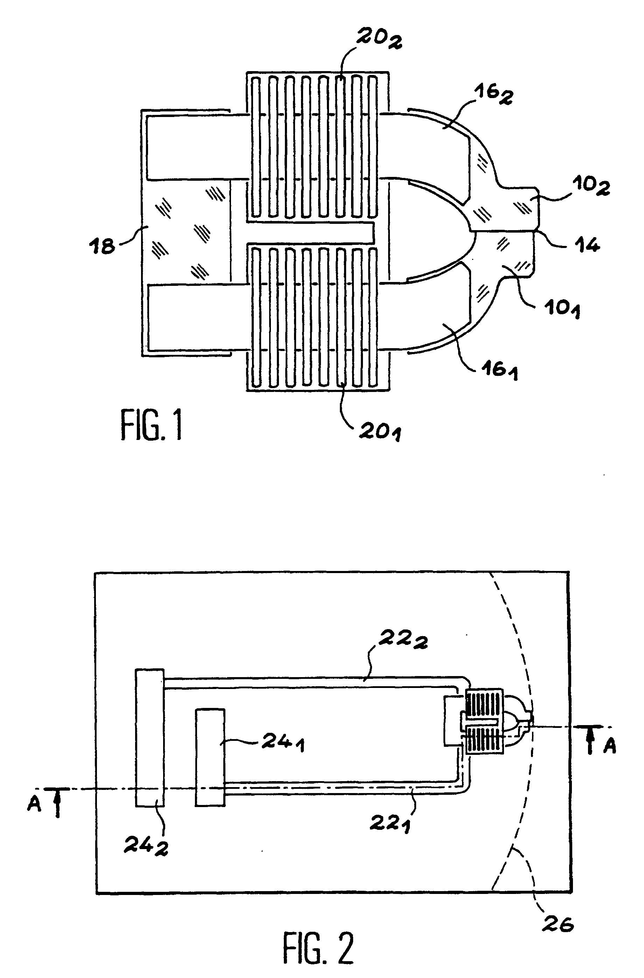

Les figures 1 à 3 annexées illustrent la structure d'un composant pour tête magnétique intégrée à couches minces selon le document FR-A-2 747 226. Telle qu'illustrée la tête comprend (figure 1), deux pièces polaires 10₁, 10₂ séparées par un entrefer 14, deux branches magnétiques 16₁, 16₂ venant recouvrir en partie les pièces polaires, et une pièce magnétique de fermeture du flux 18. L'ensemble de ces pièces constitue un circuit magnétique. Autour des branches 16₁, 16₂, on trouve des enroulements conducteurs 20₁, 20₂ pour assurer la lecture et/ou l'écriture de l'information écrite et/ou lue sur un support d'enregistrement non représenté.

La figure 2 montre la tête complète avec deux bandes conductrices 22₁, 22₂ permettant d'accéder aux enroulements conducteurs 20₁, 20₂ et deux plots de connexion électrique 24₁, 24₂.

La tête représentée sur les figures 1 et 2 peut être réalisée de manière collective par des techniques empruntées à la micro-électronique. Pour obtenir une tête magnétique individuelle à partir d'une plaquette comprenant une pluralité de composants, on peut séparer les composants les uns des autres, en les rangeant par exemple dans une structure matricielle, puis en les découpant selon des chemins rectilignes. Par usinage de la partie avant des composants on donne à chaque tête, au voisinage des pièces polaires 10₁, 10₂, une surface portante de forme arrondie nécessaire au bon fonctionnement de la tête. Sur la figure 2, le profil arrondi est représenté schématiquement par la ligne 26. Cette opération est effectuée mécaniquement sur chaque tête.

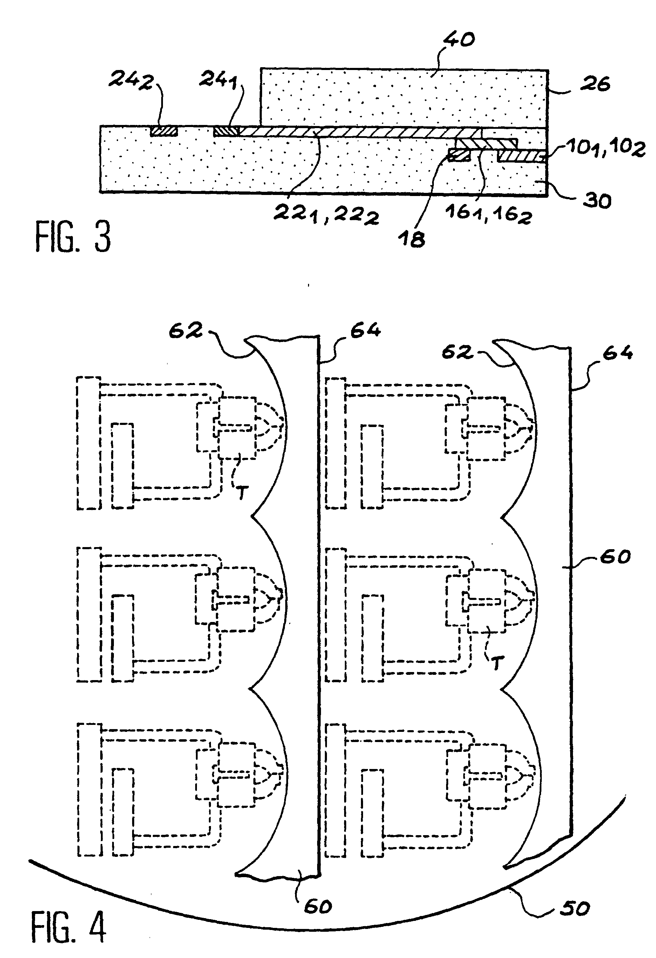

La figure 3 montre, de manière schématique, une tête vue en coupe le long d'une des bandes conductrices et d'une des branches du circuit magnétique. On y voit un substrat 30, par exemple en silicium, avec l'une des pièces polaires 10₁ ou 10₂, une branche magnétique 16₁ ou 16₂, une pièce magnétique 18 de fermeture, une bande conductrice 22₁ ou 22₂ et les plots de connexion électrique 24₁, 24₂. L'ensemble est recouvert par un superstrat 40, par exemple en silicium. Vers l'avant de la tête, la surface 26, dite surface portante, possède une forme arrondie appropriée. Vers l'arrière, le superstrat 40 est dégagé pour laisser apparaître les plots de connexion électrique 24₁, 24₂.

Bien que les procédés de réalisation de telles têtes magnétiques soient largement collectifs, il n'en demeure pas moins que la dernière étape de façonnage de la surface portante 26 est individuelle et grève considérablement le coût final de chaque tête. Cependant, on connaît, par le document US-A-4,418,472 qui est l'état de la technique le plus proche de l'invention, un procédé collectif qui utilise l'usinage ionique mais qui ne s'applique qu'aux surfaces droites. Ce procédé ne convient pas pour les surfaces arrondies avec, en outre, les faibles dimensions des têtes d'enregistrement numérique, actuelles. Or, le rayon de courbure de la tête près de l'entrefer est un paramètre essentiel dans l'obtention d'un bon contact tête/bande, donc d'une bonne qualité de l'enregistrement et d'une usure maîtrisée : un rayon de courbure trop grand ou trop faible peut conduire soit à une mauvaise qualité de contact (et donc une atténuation excessive du signal de la tête), soit à une usure accélérée de la tête. Par ailleurs, le meulage permet difficilement d'usiner des rayons de courbure très précis ou des rayons de courbure différents sur la surface portante.

La présente invention a justement pour but de remédier à ces inconvénients.

### Exposé de l'invention

A cette fin, l'invention propose un procédé de réalisation collective de têtes magnétiques intégrées intégrées dans lequel :
- on réalise, sur une plaquette, une pluralité de têtes magnétiques comprenant chacune notamment des pièces polaires séparées par un entrefer,
- on usine collectivement la plaquette pour donner à toutes les têtes, au voisinage des pièces polaires, une surface ayant une forme appropriée ;
- on sépare ensuite les têtes, la surface ainsi gravée au voisinage des pièces polaires constituant la surface portante de chacune des têtes,
ce procédé étant caractérisé en ce que ladite forme appropriée est une forme arrondie avec au moins un rayon de courbure, en ce qu'on usine collectivement la plaquette soit par photolithogravure à travers un masque, soit par découpe au moyen d'un faisceau laser.

Dans un premier mode de réalisation préferré:
- on dépose sur la plaquette au moins un masque comprenant autant de motifs que de têtes sur la plaquette, chaque motif présentant, en regard des pièces polaires de chaque composant, un bord de forme arrondie ;
- on grave collectivement par photolithogravure à travers ce(s) masque(s) la plaquette pour donner à tous les têtes, au voisinage des pièces polaires, une surface ayant ladite forme arrondie.

Dans un second mode réalisation préferré, on dirige sur la plaquette un faisceau laser apte à découper au moins en partie la plaquette et on déplace le faisceau laser le long d'un chemin arrondi. De préférence, le faisceau laser est guidé par un jet de liquide à haute pression, par exemple de l'eau.

### Brève description des dessins

- la figure 1, déjà décrite, montre une tête magnétique selon l'état de la technique ;
- la figure 2, déjà décrite, montre, en vue de dessus, une tête magnétique avec ses plots de connexion électrique ;
- la figure 3, déjà décrite, montre la même tête en coupe ;
- la figure 4 montre, en vue de dessus, une plaquette avec la partie à graver pour obtenir collectivement, par photolithographie, des têtes avec des surfaces portantes de forme appropriée ;
- la figure 5 montre en coupe la tête, avant dégagement des plots ;
- la figure 6 montre la position d'une partie à graver ;
- la figure 7 montre, en perspective, une plaquette après définition de la surface portante et dégagement de plots ;
- la figure 8 illustre une gravure profonde débouchante ;
- la figure 9 montre, en coupe, une gravure non débouchante ;
- les figures 10A à 10E illustrent des étapes d'un autre mode particulier de mise en oeuvre du procédé de l'invention selon une variante à deux gravures symétriques ;
- les figures 11A à 11D illustrent divers profils de surfaces portantes réalisables avec l'invention pour des composants à une ou plusieurs têtes ;
- la figure 12 montre, en coupe, des chemins de découpe par laser ;
- la figure 13 montre en vue de dessus ces chemins de découpe par laser et la zone de dégagement des reprises de contact.

### Exposé de modes particuliers de mise en oeuvre

Sur la figure 4, on voit une plaquette 50 avec des composants T. Ces composants comprennent chacun les éléments représentés sur la figure 2. Cette plaquette est obtenue par tout procédé collectif connu et notamment par le procédé décrit dans le document FR-A-2 747 226 déjà cité. Conformément à la première variante de l'invention, on recouvre cette plaquette d'un masque de forme appropriée pour graver les zones référencées 60.

Dans la variante illustrée, ce masque est formé de bandes avec des motifs périodiques présentant chacun un bord avant 62 de forme arrondie appropriée à la réalisation d'une surface portante, et un bord arrière droit 64. Le bord avant 62 vient chevaucher les pièces polaires des diverses têtes et le bord arrière 64 vient en retrait des plots de connexion.

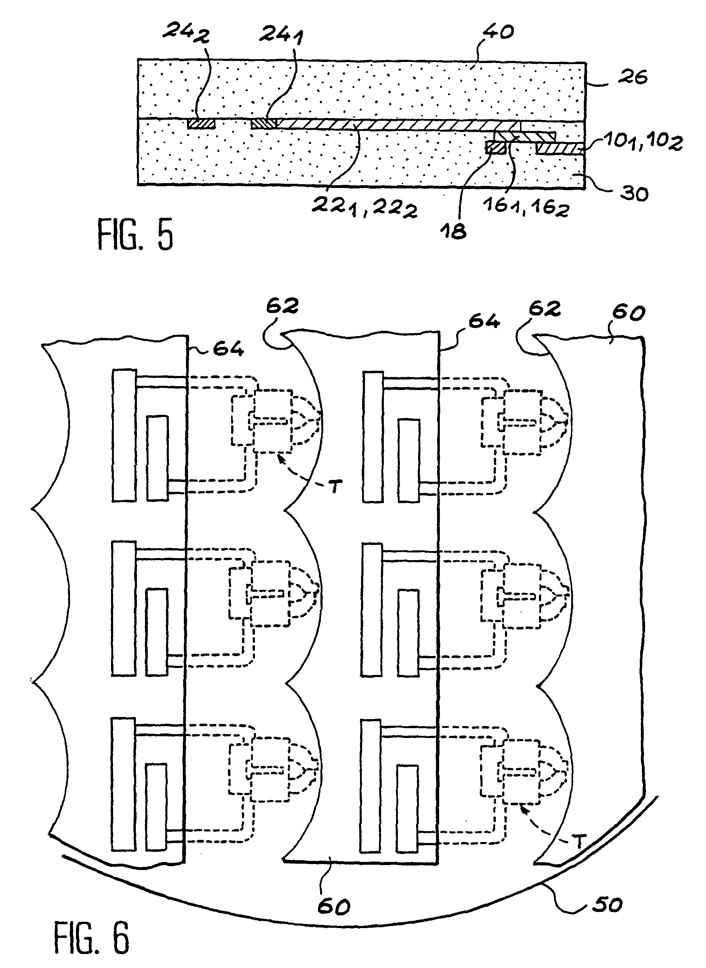

La figure 5 montre, en coupe, la tête obtenue avec un procédé utilisant un masque selon la figure 4, les plots n'étant pas encore dégagés.

La figure 6 montre la position des parties 60 à graver selon le second procédé, pour obtenir, en plus de la forme désirée pour la surface portante obtenue partiellement avec le premier masque, une reprise de contact sur les plots de la tête.

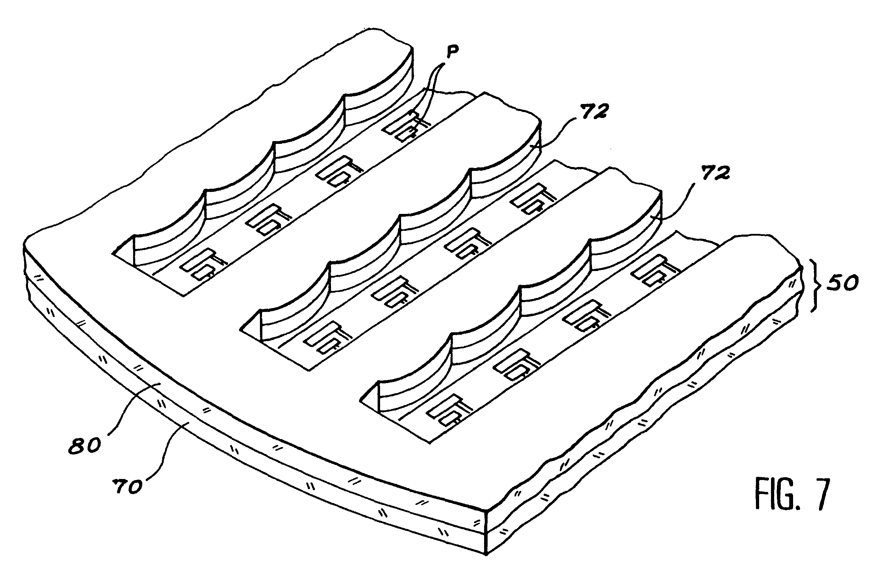

La figure 7 montre la plaquette une fois la gravure effectuée à travers le masque 60. On voit également sur cette figure le substrat 70 et le superstrat 80 venant recouvrir les têtes. Après gravure, le superstrat et au moins une partie du substrat sont gravés ce qui donne aux surfaces portantes une surface arrondie 72. Par ailleurs, comme décrit précédemment, une étape de gravure supplémentaire permet de dégager les plots de connexion P. Le pourtour de la plaquette n'est pas gravé, ce qui permet de préserver une certaine rigidité.

La figure 8 montre une partie de la plaquette dans le cas où la gravure effectuée débouche sur l'autre face du substrat 70. Le dégagement des plots est obtenu de même, par une gravure supplémentaire qui s'arrête par exemple sur une couche d'arrêt, par exemple en silice, déposée sur le substrat lors de la réalisation des têtes. Dans la variante de la figure 8, la plaquette se trouve ainsi découpée en barrettes contenant chacune une pluralité de têtes dont la surface portante 72 est formée et dont les plots de connexion P sont dégagés. Il reste à séparer ces têtes, ce qui peut être obtenu par sciage.

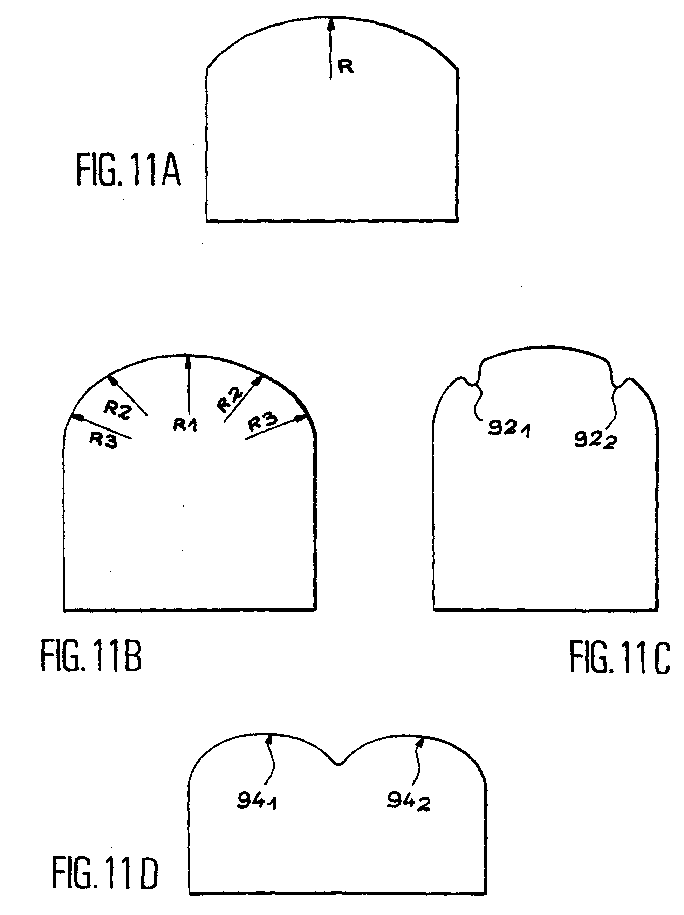

La figure 9 montre un mode de mise en oeuvre différent où la gravure ne débouche pas. Les références désignent les mêmes éléments que sur la figure 8. A titre d'exemple nullement limitatif, la gravure peut avoir une largeur (dans le plan de la figure) de 50 µm et le plateau gravé au niveau des plots de connexion une largeur (toujours dans le plan de la figure) de 500 µm. Le superstrat 70 peut éventuellement être aminci avant le dépôt du masque, jusqu'à obtenir une épaisseur d'environ 150 µm, alors que le substrat 60 peut présenter une épaisseur d'environ 500 µm. Le fond de la gorge gravée peut être, par exemple, à 300 µm du haut du superstrat.
On peut poursuivre le procédé en séparant les barrettes par un amincissement (pleine tranche) du substrat 70 jusqu'à atteindre le niveau de la gorge gravée.

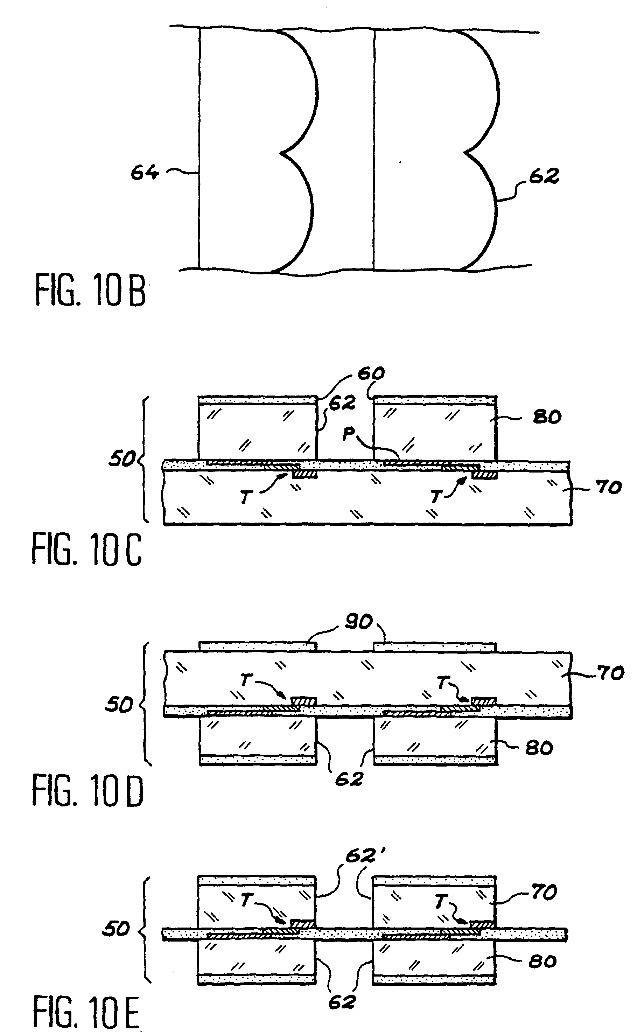

Cette première variante de l'invention peut être mise en oeuvre autrement en procédant à deux gravures symétriques avec retournement de la plaquette comme illustré sur les figures 10A à 10E. Sur la figure 10A, on voit, en coupe, le substrat 70, les têtes T, le superstrat 80 et le masque 60. La forme de celui-ci apparaît sur la figure 10B, avec ses motifs délimités par un bord avant 62 de forme arrondie et un bord arrière 64 de forme rectiligne. La figure 10C montre une première gravure permettant de former les surfaces portantes 62. Le dégagement des plots de connexion n'est pas représenté sur cette figure. Il peut être réalisé par une gravure (photolithographique ou mécanique) effectuée simultanément, avant ou après la première gravure. On retourne ensuite l'ensemble, comme représenté sur la figure 10D, et l'on dépose sur le superstrat 70 un second masque 90 que l'on grave en s'alignant sur la gravure précédemment effectuée. On opère alors une seconde gravure symétrique de la première et affectant le superstrat 70 jusqu'au niveau des têtes, ce qui donne naissance à une surface 62' (Fig. 10E). Il reste ensuite à séparer les têtes par exemple par sciage ou par cassage suivi éventuellement d'un polissage de la surface portante.

L'avantage du mode de mise en oeuvre à une seule gravure débouchante (Fig. 8) par rapport au mode de mise en oeuvre à deux gravures symétriques (Fig. 10A à 10E) est qu'il n'y a pas d'alignement de masque à prévoir, par ailleurs le profil de gravure est continu, ce qui facilite l'étape de finition.
Mais la double gravure symétrique présente elle aussi des avantages. En effet, la technique de fabrication des têtes intégrées entraîne souvent la présence de matériaux de natures différentes dans l'épaisseur de la plaquette. Par exemple, si l'on réalise les têtes dans des caissons d'oxyde de silicium sur un substrat de silicium et si l'on dépose un superstrat en silicium, on trouvera, au milieu d'un ensemble presque entièrement constitué de silicium, une fine couche d'oxyde de silicium contenant à certains endroits les parties actives des têtes. La gravure profonde utilisée dans le premier mode de mise en oeuvre pourrait être difficile à réaliser dans un tel matériau non homogène. Dans ce cas, la gravure double face peut être avantageuse. Les deux gravures s'arrêteront sur la couche de nature différente (par exemple en oxyde de silicium). La fine couche subsistant pourra ensuite être gravée ou sciée ou cassée. Une finition ultérieure enlèvera les débris et mettra le profil de cette fine couche en conformité avec le reste de la surface portante usinée par les gravures profondes.

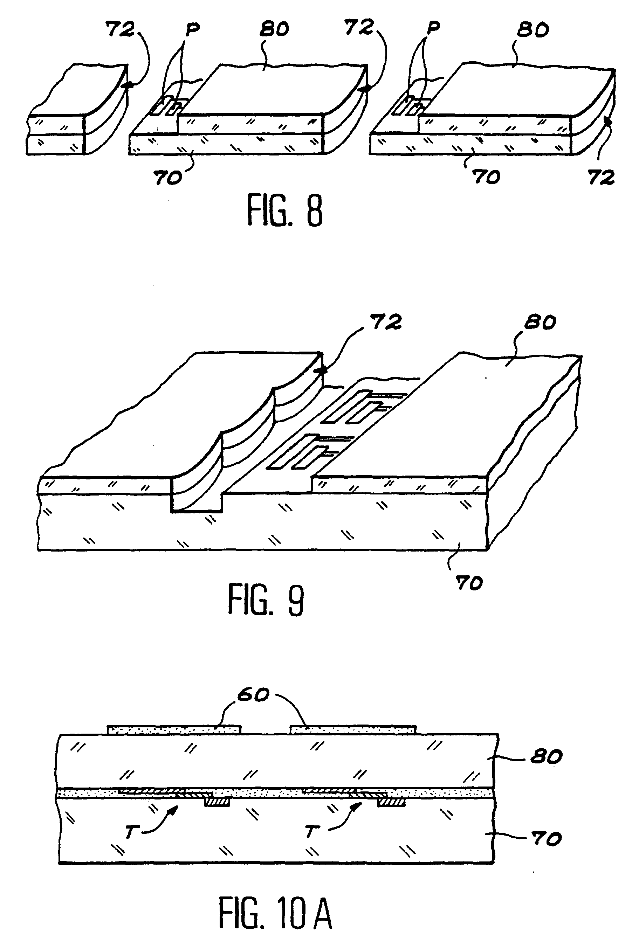

Les figures 11A à 11D, enfin, illustrent quelques exemples de profils de surface portante pouvant être obtenues grâce à l'invention. Sur la figure 11A le rayon de courbure R est unique. Sur la figure 11B, le rayon de courbure change et prend une valeur R1 au centre puis une valeur R2 sur les côtés et une valeur R3 aux extrémités. Sur la figure 11C, la surface portante contient deux parties concaves 92₁ et 92₂. La figure 11D montre un profil double 94₁, 94₂ utile pour une tête double appelée aussi composant à deux têtes. Naturellement, ces exemples ne sont pas limitatifs, des composants à plus de deux têtes sont également envisageables.

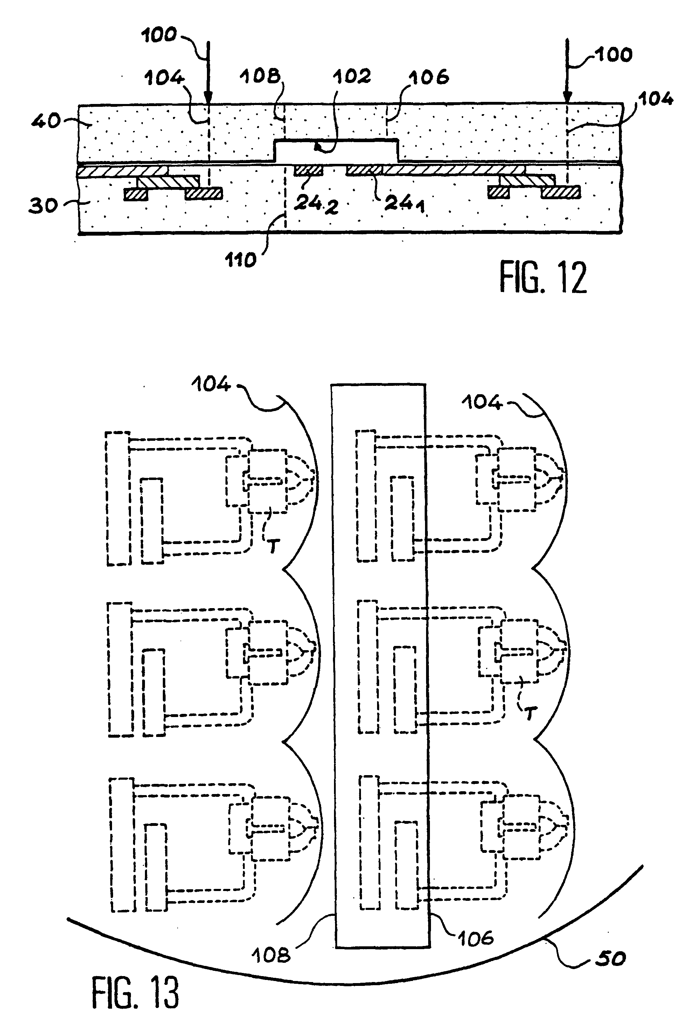

Les figures 12 et 13 illustrent la seconde variante de l'invention utilisant une découpe par faisceau laser guidé notamment par un jet de liquide à haute pression, par exemple de l'eau.
La figure 12 montre un superstrat 40 préalablement usiné par un rainurage 102 placé de telle sorte qu'après assemblage sur le substrat 30 le rainurage se trouve au-dessus des plots de connexion 24₁, 24₂. La découpe laser s'effectue suivant le chemin marqué par les flèches 104. Le faisceau laser est symbolisé par les flèches 100. Cette découpe donne aux composants, au voisinage des pièces polaires, la forme arrondie souhaitée. On peut dégager les plots de connexion en dégageant la partie située au-dessus du rainurage 102, par exemple par découpe laser ou sciage mécanique le long des lignes 106 et 108. Contrairement au chemin de découpe 104, qui est arrondi, les lignes 106 et 108 sont rectilignes.

La figure 13 montre en vue de dessus ces différents chemins de découpe laser 104 et lignes de découpe 106, 108.
Une ultime découpe le long de la ligne 110 permet de séparer les têtes.

De multiples variantes sont possibles pour dégager les plots de contact :
- soit par rainurage débouchant du superstrat (scie, meule, laser ou tout autre moyen de gravure) avant assemblage sur le substrat,
- soit par rainurage non débouchant du superstrat (meule ou gravure quelconque) avant assemblage, puis découpe
   1) partielle suivant le chemin 106 (laser à puissance réduite, scie, gravure partielle, ...) et complète suivant les chemins 108 et 110 (laser, scie),
   2) ou bien partielle sur toute la zone à dégager entre les chemins 106 et 108 (meule, gravure quelconque), puis découpe complète suivant le chemin 110,
- soit par photolithographie puis gravure du superstrat entre les chemins 106 et 108 suivie d'une découpe (scie, laser, ...) suivant le chemin 110.

Les avantages procurés par l'invention, quel que soit le mode de mise en oeuvre (photolithogravure ou découpe laser) sont nombreux par rapport aux techniques antérieures :
- tout d'abord, le procédé de l'invention permet d'usiner plusieurs milliers de têtes à la fois ;
- ensuite, il conduit à une bonne reproductibilité de la forme donnée à chaque surface portante ; or le rayon de courbure de la tête, près de l'entrefer est déterminant dans la qualité du contact tête/support d'enregistrement ;
- l'invention permet en outre d'obtenir des formes complexes avec une courbure changeant le long de la surface portante, ce qui était très difficile voire impossible avec une technique mécanique, surtout pour les petites tailles de têtes ;
- contrairement aux meules, qui ont souvent besoin d'être redressées, ni les masques ni le laser utilisés dans l'invention ne s'usent, ce qui élimine les dérives de forme au cours du temps.

Les procédés qui viennent d'être décrits peuvent être combinés avec un procédé permettant d'amincir la partie des têtes en contact (ou en quasi-contact) avec le support d'enregistrement. Un tel procédé est décrit et revendiqué dans la demande de brevet français n°98 09642 intitulée "Procédé de réalisation collective de têtes magnétiques intégrées à surface portante de hauteur déterminée" déposée par le présent Demandeur. Les opérations d'amincissement peuvent procéder ou suivre les opérations de formation de la surface portante ou même être concomitantes.

## Revendications

1. Procédé de réalisation collective de têtes magnétiques intégrées dans lequel :
- on réalise, sur une plaquette (50), une pluralité de têtes magnétiques (10₁, 10₂, 14, 16₁, 16₂, 18, 20₁, 20₂) comprenant chacune notamment des pièces polaires (10₁, 10₂) séparées par un entrefer (14),
- on usine collectivement la plaquette (50) pour donner à toutes les têtes, au voisinage des pièces polaires (10₁, 10₂), une surface (72) ayant une forme appropriée ;
- on sépare ensuite les têtes, la surface (72) ainsi gravée au voisinage des pièces polaires (10₁, 10₂) constituant la surface portante de chacune des têtes,
ce procédé étant **caractérisé en ce que** ladite forme appropriée est une forme arrondie avec au moins un rayon de courbure, **en ce qu'**on usine collectivement la plaquette (50) soit par photolithogravure à travers un masque (60), soit par découpe (104) au moyen d'un faisceau laser (100).

2. Procédé selon la revendication 1, dans lequel :
- on dépose sur la plaquette (50) au moins un masque (60) comprenant autant de motifs que de tetes sur la plaquette, chaque motif présentant, en regard des pièces polaires (10₁, 10₂) de chaque tête, un bord de forme arrondie (62) ;
- on grave collectivement par photolithogravure à travers ce(s) masque(s) (60) la plaquette (50) pour donner à toutes les têtes, au voisinage des pièces polaires (10₁, 10₂), une surface (72) ayant ladite forme arrondie.

3. Procédé selon la revendication 1, dans lequel on dirige sur la plaquette un faisceau laser (100) apte à découper au moins en partie la plaquette (50) et on déplace le faisceau laser (100) le long d'un chemin arrondi (104).

4. Procédé selon la revenidcation 3, dans lequel le faisceau laser est guidé par un jet de liquide à haute pression.

5. Procédé selon l'une quelconque des revendications 2 et 3, dans lequel chaque tête comprend, à l'avant, lesdites pièces polaires (10₁, 10₂) et, à l'arrière, des plots de connexion électrique (24₁, 24₂, P), et dans lequel on dégage ces plots de connexion.

6. Procédé selon la revendication 1, dans lequel ladite photolithogravure ou ladite découpe laser est traversante.

7. Procédé selon la revendication 2, dans lequel on dépose un premier masque (60) sur une première face de la plaquette (50) et l'on effectue une première photolithogravure non traversante pour donner aux têtes la surface arrondie appropriée, on dépose ensuite un second masque (90) sur une deuxième face (70) de la plaquette et l'on effectue une seconde photolithogravure de la plaquette (50).

8. Procédé selon la revendication 7, dans lequel la seconde gravure est non traversante et dans lequel on effectue une gravure supplémentaire.

9. Procédé selon la revendication 3, dans lequel on effectue une première découpe laser non traversante pour donner aux têtes la surface arrondie appropriée et dans lequel on effectue une gravure supplémentaire.

10. Procédé selon la revendication 1, dans lequel la plaquette (50) comprend un substrat (70) supportant la pluralité de têtes et un superstrat (80) recouvrant les têtes.

11. Procédé selon la revendication 8 dans lequel on effectue un rainurage (102) dans le superstrat lequel rainurage vient se placer au-dessus des plots de connexion.

12. Procédé selon la revendication 8, dans lequel on amincit le superstrat (80) et/ou le substrat (70) avant d'effectuer la photolithogravure ou la découpe laser.

## Patentansprüche

1. Verfahren zur kollektiven Herstellung von integrierten Magnetköpfen, bei dem :
- man auf einer Scheibe (50) eine Vielzahl von Magnetköpfen (10₁, 10₂, 14, 16₁, 16₂, 18, 20₁, 20₂) realisiert, von denen jeder insbesondere durch einen Spalt (14) getrennte Polschuhe (10₁, 10₂) umfasst,
- man die Scheibe (50) kollektiv bearbeitet, um allen Köpfen in der Nähe der Polschuhe (10₁, 10₂) eine Fläche (72) von geeigneter Form zu geben;
- man anschließend die Köpfe trennt, wobei die in der Nähe der Polschuhe (10₁, 10₂) geätzte Fläche die tragende Fläche jedes Kopfes ist,
wobei dieses Verfahren **dadurch gekennzeichnet ist, dass** die genannte geeignete Form eine rundliche Form ist, mit wenigstens einem Krümmungsradius, dass man die Scheibe (50) kollektiv bearbeitet, entweder mittels Photolithographie durch eine Maske (60) hindurch, oder durch Schneiden (104) mittels eines Laserstrahls (100).

2. Verfahren nach Anspruch 1, bei dem :
- man auf der Scheibe (50) wenigstens eine Maske (60) abscheidet, die ebenso viele Muster wie die Scheibe Köpfe umfasst, wobei jedes Muster, den Polschuhen (10₁, 10₂) jedes Kopfs gegenüberstehend, einen Rand von runder Form (62) aufweist;
- man kollektiv mittels Photolithographie durch diese Maske(n) (60) hindurch die Scheibe (50) ätzt, um allen Köpfen in der Nähe der Polschuhe (10₁, 10₂) eine Fläche mit der genannten runden Form zu geben.

3. Verfahren nach Anspruch 1, bei dem man einen Laserstrahl (100) auf die Scheibe richtet, fähig die Scheibe (50) wenigstens teilweise zu durchschneiden, und man den Laserstrahl (100) längs eines runden Wegs (104) verschiebt.

4. Verfahren nach Anspruch 3, bei dem der Laserstrahl durch einen Hochdruck-Flüssigkeitsstrahl geleitet wird.

5. Verfahren nach einem der Ansprüche 2 und 3, bei dem jeder Kopf vorn die genannten Polschuhe (10₁, 10₂) und hinten elektrische Verbindungselemente (24₁, 24₂, P) umfasst, und bei dem man diese Verbindungselemente freilegt.

6. Verfahren nach Anspruch 1, bei dem die genannte Photolithographie oder der genannte Laserschnitt durchgehend sind.

7. Verfahren nach Anspruch 2, bei dem man eine erste Maske (60) auf einer ersten Fläche der Scheibe (50) abscheidet und man eine erste, nicht durchgehende Photolithographie durchführt, um den Köpfen die geeignete runde Fläche zu geben, man anschließend eine zweite Maske (90) auf einer zweiten Fläche (70) der Scheibe abscheidet und eine zweite Photolithographie der Scheibe (50) durchführt.

8. Verfahren nach Anspruch 7, bei dem die zweite Ätzung nicht durchgehend ist und bei dem man eine zusätzliche Ätzung durchführt.

9. Verfahren nach Anspruch 3, bei dem man einen ersten, nicht durchgehenden Laserschnitt ausführt, um den Köpfen die geeignete runde Fläche zu geben, und bei dem man eine zusätzliche Ätzung durchführt.

10. Verfahren nach Anspruch 1, bei dem die Scheibe (50) ein Substrat (70) umfasst, das die Vielzahl von Köpfen trägt, und ein Superstrat (80), das die Köpfe bedeckt.

11. Verfahren nach Anspruch 8, bei dem man in dem Superstrat eine Nut (102) herstellt, die über den Verbindungselementen angeordnet wird.

12. Verfahren nach Anspruch 9, bei dem man das Superstrat (80) und/oder das Substrat (70) dünner macht, ehe man die Photolithographie oder den Laserschnitt durchführt.

## Claims

1. A process for collectively making integrated magnetic heads, wherein:
- on a wafer (50) are made a plurality of magnetic heads (10₁, 10₂, 14, 16₁, 16₂, 18, 20₁, 20₂) able to constitute at least one magnetic head, each comprising pole pieces (10₁, 10₂) separated by an air-gap (14),
- the wafer (50) is machined collectively so as to give to all the heads, in the vicinity of the pole pieces (10₁, 10₂), a surface (72) having an appropriate shape;
- the heads are then separated, the surface (72) thus engraved in the vicinity of the pole pieces (10₁, 10₂) constituting the bearing surface of each of the heads,
this process being **characterized in that** said appropriate shape is a rounded shape with at least one radius of curvature, wherein the wafer (50) is machined collectively either by masked photolithography (60), or by cutting (104) by means of a laser beam (100).

2. A process according to claim 1, wherein:
- on the wafer (50) is deposited at least one mask (60) including as many patterns as heads on the wafer, each pattern having, opposite the pole pieces (10₁, 10₂) of each head, an edge of rounded shape (62);
- the wafer (50) is engraved collectively by photolithography through this mask or these masks (60) to give to all the heads, in the vicinity of the pole pieces (10₁, 10₂), a surface (72) having said rounded shape.

3. A process according to claim 1, wherein a laser beam (100) able to cut the wafer (50) at least partially is directed onto the wafer (50) and the laser beam (100) is moved along a rounded path (104).

4. A process according to claim 3, wherein the laser beam is guided by a jet of liquid at high pressure.

5. A process according to any one of claims 2 and 3, wherein each head includes, at the front, said pole pieces (10₁, 10₂) and, at the back, electrical connection jacks (24₁, 24₂, P), and wherein these connection jacks are disengaged.

6. A process according to claim 1, wherein said photolithography or said laser cutting goes right through.

7. A process according to claim 2, wherein a first mask (60) is deposited on a first face of the wafer (50) and a first non-through photolithography is effected to give the heads the appropriate rounded surface, then a second mask (90) is deposited on a second face (70) of the wafer and a second photolithography of the wafer (50) is effected.

8. A process according to claim 7, wherein the second engraving does not go through and wherein an additional engraving is effected.

9. A process according to claim 3, wherein a first non-through laser cutting is effected to give the heads the appropriate rounded surface and wherein an additional engraving is effected.

10. A process according to claim 1, wherein the wafer (50) includes a substrate (70) supporting the plurality of heads and a superstrate (80) covering the heads.

11. A process according to claim 8, wherein a grooving (102) is effected in the superstrate which grooving comes into position above the connection jacks.

12. A process according to claim 8, wherein the superstrate (80) and/or the substrate (70) is thinned before effecting the photolithography of the laser cutting.
